Europäisches Patentamt

European Patent Office

Office européen des brevets

(19)

(11) Veröffentlichungsnummer : **0 583 487 B1**

(12)

# EUROPÄISCHE PATENTSCHRIFT

(45) Veröffentlichungstag der Patentschrift :
04.10.95 Patentblatt 95/40

(51) Int. Cl.$^6$ : **G05B 19/4103**, G05B 19/416

(21) Anmeldenummer : 92112461.6

(22) Anmeldetag : 21.07.92

(54) **Verfahren zur zeitoptimalen bahntreuen Abbremsung der Achsantriebe von numerisch gesteuerten Maschinen.**

(43) Veröffentlichungstag der Anmeldung :
23.02.94 Patentblatt 94/08

(45) Bekanntmachung des Hinweises auf die
Patenterteilung :
04.10.95 Patentblatt 95/40

(84) Benannte Vertragsstaaten :
**BE DE ES FR GB IT NL SE**

(56) Entgegenhaltungen :
**EP-A- 0 102 219**
**EP-A- 0 439 617**

(73) Patentinhaber : **SIEMENS**
**AKTIENGESELLSCHAFT**
**Wittelsbacherplatz 2**
**D-80333 München (DE)**
Patentinhaber : **KUKA Schweissanlagen &**
**Roboter GmbH**
**Postfach 431349**
**D-86073 Augsburg (DE)**

(72) Erfinder : **Olomski, Jürgen, Dr.-Ing.**
**Von-Andechs-Weg 24**
**W-8522 Herzogenaurach (DE)**
Erfinder : **Settele, Norbert**
**Rosenweg 13**
**W-8891 Petersdorf/Willprechtszell (DE)**
Erfinder : **Liepert, Bernd, Dipl.-Mathem.**
**Bernhard-Monath-Strasse 8**
**W-8901 Meitingen (DE)**

(74) Vertreter : **Fuchs, Franz-Josef, Dr.-Ing. et al**
**Postfach 22 13 17**
**D-80503 München (DE)**

**Beschreibung**

Verfahren zur bahntreuen Abbremsung der Achsantriebe von numerisch gesteuerten Maschinen

Die Erfindung bezieht sich auf ein Verfahren nach dem Oberbegriff des Hauptanspruchs. Ein solches Verfahren ist aus der EP-A-0 102 219 bekannt. Im Normalbetrieb wird dabei die Bahntreue zwar eingehalten, jedoch ergeben sich bei Notbremssituationen die im weiteren geschilderten Problem.

Bei numerisch gesteuerten Maschinen, insbesondere bei Werkzeugmaschinen oder Robotern, ist für Gefahrensituationen eine Notbremsung der Achsantriebe vorgesehen, die entweder durch eine NOT-AUS-Bedienung anwenderseitig oder durch externe Geräte oder in folge einer internen Fehlerreaktion ausgelöst wird. Bei einer solchen Notauslösung sollen die Antriebe der numerisch gesteuerten Maschine in kürzester Zeit durch entsprechende Vorgabe der Drehzahlsollwerte linear abgebremst werden. Etwa 30 bis 50 Millisekunden nach der Notauslösung wird dann eine sicherheitstechnisch notwendige Kurzschlußbremsung eingeleitet, so daß die Motoren unter Umgehung der Steuerung auf jeden Fall zum Stillstand kommen.

Bei einer solchen Notbremsung kann die numerisch gesteuerte Maschine die vorbestimmte Werkzeugbahn nicht mehr einhalten, da die Achsen unabhängig voneinander gebremst werden. Selbst wenn die Achsantriebe so synchronisiert werden, daß eine zeitliche Anpassung der Achsen an die Achse mit der geringsten Verzögerung erfolgt, kommt es zumindest bei gekrümmten Bahnen zu Bahnabweichungen.

Die Schwierigkeiten bei der Wiederaufnahme des Bearbeitungsvorganges sind noch das geringste Problem bei einer solchen Notbremsung. Weit größere Probleme entstehen, wenn das Werkzeug bei der Bahnabweichung mit dem Werkstück oder anderen Gegenständen kollidiert oder wenn sich beispielsweise Kollisionen zwischen mehreren nebeneinander arbeitenden Robotern ergeben.

Es ist Aufgabe der Erfindung, ein Verfahren der eingangs genannten Art zum zeitoptimalen bahntreuen Abbremsen von numerisch gesteuerten Maschinen zu schaffen.

Dieses Verfahren wird durch die kennzeichnenden Merkmale des Hauptanspruchs gelöst. Es läßt sich auf alle Bewegungen anwenden, bei dem die Achswinkelwerte unmittelbar vorliegen, wie beispielsweise bei der Punkt- zu Punktbewegung. In diesem Zusammenhang wird unter der Werkzeugbahn auch die Bahn verstanden, die das Werkzeug bei einer Punkt- zu Punktbewegung zurücklegt.

Wenn die Achswinkelstellungen nicht direkt vorliegen, sondern erst über eine Koordinatentransformation aus einem anderen Koordinatensystem, beispielsweise aus einem kartesischen Koordinatensystem berechnet werden müssen, so ist dafür eine Ausbildung der Erfindung vorgesehen, bei der die Interpolations- und Bremsinterpolationspunkte in dem nichtachsspezifischen Koordinatensystem berechnet und dann ins achsspezifische Koordinatensystem zur Bestimmung der Achsantriebsverzögerung transformiert werden.

Zur Erhöhung der Sicherheit bei der Notbremsung ist es vorteilhaft auch bei diesem Verfahren nach einer vorgegebenen Zeitspanne eine Kurzschlußbremsung einzuleiten.

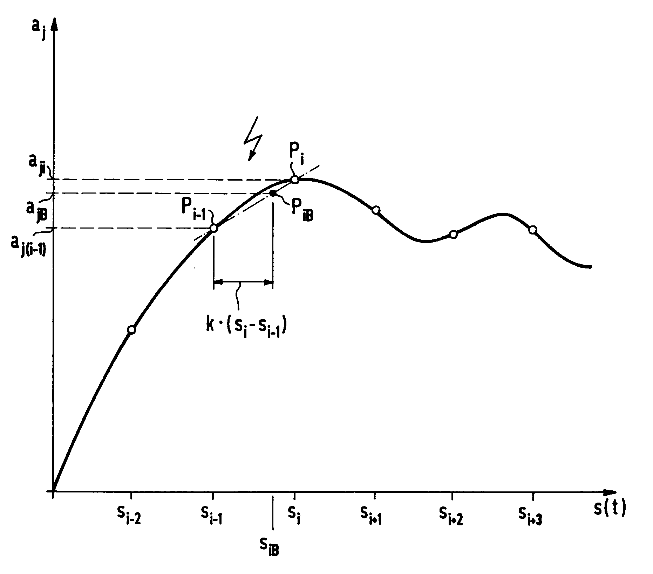

Ein Ausführungsbeispiel der Erfindung wird anhand der Zeichnung im folgenden näher beschrieben.

Die Figur zeigt das Diagramm der Achswinkelstellung $a_j$ der Achse j über einem von der Zeit t abhängigen Interpolationsparameter s(t). Der Interpolationsparameter s(t) kann im einfachsten Fall direkt die Zeit t sein oder er kann als steuerungsinterne Systemzeit (tau) mit der Zeit t verknüpft sein; auch die Weglänge wäre als Interpolationsparameter s(t) denkbar. Die Wahl dieses Parameters kann mit Rücksicht auf die jeweilige Steuerung dem Fachmann überlassen werden.

Vom Interpolator einer numerischen Steuerung werden Interpolationspunkte P berechnet, die die Achswinkelstellung $A = (a_1, a_2, ..., a_n)$ aller n Achsen in Abhängigkeit vom Interpolationsparameter s(t) angeben. Im Interpolationstakt i soll

$$t = t_i \quad (1)$$
$$s(t_i) = s_i \quad (2)$$
$$A(s_i) = A_i = (a_{1i}, a_{2i}, ..., a_{ni}) \quad (3)$$

gelten. $s_i$ und $A_i$ bestimmen den Interpolationspunkt $P_i$. Mit diesen Achswinkelstellungen $A_i$ werden die Achsantriebe einer numerisch gesteuerten Werkzeugmaschine oder eines Roboters geregelt, so daß das jeweilige Werkzeug eine vorbestimmte Bahn abfährt.

Wenn zwischen zwei Interpolationspunkten $P_{i-1}$, $P_i$ ein NOT-AUS-Signal vorliegt (in der Figur durch ein Blitzsymbol angedeutet), so wird ein Bremsinterpolationspunkt $P_{iB}$ berechnet, der zwischen dem vorhergehenden Interpolationspunkt $P_{i-1}$ und dem Interpolationspunkt $P_i$ liegt, der erechnet werden würde, wenn kein NOT-AUS-Signal vorläge. Der Bremsinterpolationspunkt $P_{iB}$ wird so berechnet, daß für jede Achse die maximal mögliche Bremsbeschleunigung (Verzögerung) angesetzt wird. Dabei soll der zum Bremsinterpolationspunkt $P_{iB}$ gehörende Bremsinterpolationsparameter $s_{iB}$ zwischen $s_{i-1}$ und $s_i$ liegen und mit k bestimmt sein:

$$s_{iB} = s_{i-1} + k \cdot (s_i - s_{i-1}) \quad (4)$$

Für kleine Interpolationsintervalle lassen sich die zugehörigen Achswinkelstellungen $A_{iB}$ hinreichend genau nach Gleichung 5 bestimmen:

$$A_{iB} = A_{i-1} + k \cdot (A_i - A_{i-1}) \quad (5)$$

Gleichung 5 läßt sich bei einer Punkt- zu Punktbewegung direkt anwenden, da bei dieser Bewegung die Achswinkelstellungen unmittelbar berechnet werden können. Falls die Achswinkelstellungen wie beispielsweise bei einer Continuous-Path-Bewegung nicht unmittelbar vorliegen, müssen diese zunächst aus den vorliegenden Geometriedaten, beispielsweise aus kartesischen Koordinaten durch eine Koordinatentransformation berechnet werden. Diese Koordinatentransformationen sind aus dem Stand der Technik hinreichend bekannt so daß im folgenden darauf nicht weiter eingegangen zu werden braucht.

Da in der Regel bei den numerisch gesteuerten Maschinen die maximal zulässige Bremsbeschleunigung - $(da^2/dt^2)_{max} = - \ddot{a}_{max}$ für jede Achse verschieden ist, wird zunächst für jede Achse $a_j$ ein eigener optimaler Faktor $k_j$ berechnet:

$$- \ddot{a}_{max} = (a_j (s_{i-1}) + k_j (a_j(s_i) - a_j(s_{i-1})) - 2 a_j (s_{i-1}) + a_j (s_{i-2}))/T^2_{ipo} \quad (6)$$

wobei $T_{ipo}$ die Interpolationstaktzeit der numerischen Steuerung ist.

Aus den n-Faktoren $k_j$ (j = 1...n) wird der größte Faktor $k_j$ ausgewählt, so daß die Achse j mit ihrem Maximalwert und die übrigen Achsen weniger stark gebremst werden, was bedeutet, daß die Achse j die führende Achse ist, die die Verzögerung festlegt. Falls k kleiner 0 wird, ist der Stillstand erreicht und k wird auf Null gesetzt.

Die so ermittelten Achswinkelstellungen $A_{iB}$ mit dem dazugehörigen Parameter $s_{iB}$ ersetzt anschließend für diesen Interpolationstakt die vorab berechneten Achswinkelstellungen $A_i$ und den vorab berechneten Parameter $s_i$:

$$A_i := A_{iB} \quad (7)$$
$$s_i := s_{iB} \quad (8)$$

In jedem der folgenden Interpolationstakte wird die führende Achse neu bestimmt, d.h. das beschriebene Verfahren muß bei jedem Interpolationstakt ausgeführt werden, bis der Roboter zum Stillstand gekommen ist oder bis eine Kurschlußbremsung mit größerer Priorität eingeleitet wird.

Wenn es die Sicherheitsaspekte und -vorschriften zulassen, sollte die Zeitverzögerung mit der die Umrichter der numerischen Steuerung auf Kurzschlußbremsung wechseln, so eingestellt werden, daß die Mechanik mit dem beschriebenen Verfahren unter allen Umständen zum Stillstand kommt, bis die Kurzschlußbremsung einsetzt. Dies ist beispielsweis dann der Fall, wenn die Werkzeugmaschine oder der Roboter im Automatikbetrieb eingesetzt ist und eine verriegelbare Schutztür, die dann auch verriegelt sein muß, vorhanden ist.

1.1 Vom Interpolator der numerischen Steuerung werden zur Bewegung der Achsen Interpolationspunkte ($P_i$) der Achswinkelstellung $(A_i) = (a_{1i}, a_{2i}, ... a_{ni})$ aller n Achsen über einem Interpolationsparameter (s(t)) bestimmt, **gekennzeichnet** durch die weiteren Schritte:
1.2. bei Auslösung einer Notbremsung zwischen zwei Interpolationspunkten ($P_{i-1},P_i$) wird ein Bremsinterpolationspunkt ($P_{iB}$) berechnet, dessen zugehöriger Parameterwert ($s_{iB}$) zwischen dem vorhergehenden Interpolationsparameterwert ($s_{i-1}$) und dem Interpolationsparameterwert ($s_i$), der ohne Notbremsung berechnet worden wäre, liegt, wobei sich der Bremsinterpolationsparameter ($s_{iB}$) und die zugehörigen Achswinkelstellungen ($A_{iB}$) ergeben zu:

$$S_{iB} = s_{i-1} + k \cdot (s_i - s_{i-1}) \quad (1)$$
$$A_{iB} = A_{i-1} + k \cdot (A_i - A_{i-1}) \quad (2)$$

wobei k so bestimmt wird, daß mindestens ein Achsantrieb mit einem maximal zulässigen Wert und die verbleibenden Achsantriebe schwächer gebremst werden, wobei für jede Achswinkelstellung $a_j$ für jede Achse j sich damit ein eigener optimaler Faktor $k_j$ ergibt, der zur maximal zulässigen Bremsbeschleunigung $-\ddot{a}_{max}$ im folgenden Zusammenhang steht:

$$- \ddot{a}_{max} = (a_j (s_{i-1}) + k_j (a_j(s_i) - a_j(s_{i-1})) - 2 a_j (s_{i-1}) + a_j (s_{i-2}))/T^2_{ipo} \quad (3)$$

wobei $T_{ipo}$ die Interpolationstaktzeit der numerischen Steuerung ist,
1.3 Schritt 1.2 wird zur Bestimmung jedes weiteren Bremsinterpolationspunktes ($P_{iB}$) bis zum Stillstand der Achsbewegungen durchgeführt, wobei jeweils nach Bestimmung von Gleichung (1) und (2) $s_i$ durch $s_{iB}$ und $A_i$ durch $A_{iB}$ ersetzt wird.

2. Verfahren nach Anspruch 1, wobei die Interpolations- und Bremsinterpolationspunkte ($P_i,P_{iB}$) in einem nicht-achsspezifischen Koordinatensystem berechnet und dann in das achsspezifische Koordinatensystem zur Bestimmung der Achsantriebsverzögerung transformiert werden.

3. Verfahren nach einem der vorstehenden Ansprüche, wobei nach einer vorgegebenen Zeitspanne eine Kurzschlußbremsung eingeleitet wird.

**Patentansprüche**

1. Verfahren zur bahntreuen Abbremsung der Achsantriebe von numerisch gesteuerten Maschinen mit folgendem Schritt:

**Claims**

1. A method for the true-to-path braking of the axle drives of numerically controlled machines comprising the following step:

1.1 for the movement of the axles, the interpolator of the numerical control system defines interpolation points ($P_i$) of the axle angular position ($A_i$) = ($a_{1i}$, $a_{2i}$,..., $a_{ni}$) of all n axles over an interpolation parameter ($s(t)$), characterised by the further steps:

1.2 on the tripping of an emergency braking between two interpolation points ($P_{i-1}$, $P_i$), a braking interpolation point ($P_{iB}$) is calculated, the associated parameter value ($s_{iB}$) of which lies between the preceding interpolation parameter value ($s_{i-1}$) and the interpolation parameter value ($s_i$) which would have been calculated without emergency braking, where the braking interpolation parameters ($s_{iB}$) and the associated axle angular positions ($A_{iB}$) are calculated as follows:

$$S_{iB} = s_{i-1} + k \cdot (s_i - s_{i-1}) \quad (1)$$
$$A_{iB} = A_{i-1} + k \cdot (A_i - A_{i-1}) \quad (2)$$

where k is defined such that at least one axle drive is braked with a maximum permissible value and the remaining axle drives are not braked so heavily, where for each axle angular position $a_j$ for each axle j a separate optimal factor $k_j$ thus occurs, which factor $k_j$ exhibits the following relationship with the maximum permissible braking acceleration - $ä_{max}$:

$$- ä_{max} = (a_j (s_{i-1}) + k_j (a_j(s_i) - a_j(s_{i-1})) - 2 a_j (s_{i-1}) + a_j (s_{i-2}))/T^2_{ipo} \quad (3)$$

where $T_{ipo}$ is the interpolation clock cycle time of the numerical control system,

1.3 step 1.2 is carried out in order to determine each further braking interpolation point ($P_{iB}$) until the axle movements come to a standstill, where in each case in accordance with Equation (1) and (2) $s_i$ is replaced by $s_{iB}$ and $A_i$ is replaced by $A_{iB}$.

2. A method as claimed in Claim 1, where the interpolation- and braking interpolation points ($P_i$, $P_{iB}$) are calculated in a non-axle-specific coordinate system and are then transformed into the axle-specific coordinate system for the determination of the axle drive deceleration.

3. A method as claimed in one of the preceding claims, where a short-circuit braking is introduced after a predetermined interval of time.

## Revendications

1. Procédé de freinage, tout en conservant fidèlement la trajectoire, des dispositifs d'entraînement d'axes de machines à commande numérique, comportant l'étape suivante :

1.1 on détermine, pour le mouvement des axes, des points ($P_i$) d'interpolation de la position angulaire ($A_i$) = ($a_{1i}$, $a_{2i}$, ... $a_{ni}$) de tous les n axes par l'interpolateur de la commande numérique, par l'intermédiaire d'un paramètre ($s(t)$) d'interpolation, caractérisé par les étapes supplémentaires suivantes :

1.2. du déclenchement d'un freinage d'urgence entre deux points ($P_{i-1}$, $P_i$) d'interpolation, on calcule un point ($P_{iB}$) d'interpolation de freinage, dont la valeur associée ($s_{iB}$) du paramètre est comprise entre la valeur ($s_{i-1}$) précédente du paramètre d'interpolation et la valeur ($s_i$) du paramètre d'interpolation, que l'on aurait calculé sans freinage d'urgence, le paramètre ($s_{iB}$) d'interpolation de freinage et les positions ($A_{iB}$) angulaires associées des axes étant donnés par :

$$s_{iB} = s_{i-1} + k \cdot (s_i - s_{i-1}) \quad (1)$$
$$A_{iB} = A_{i-1} + k \cdot (A_i - A_{i-1}) \quad (2)$$

et k est déterminé de sorte que l'on freine au moins un dispositif d'entraînement d'un axe à une valeur admissible maximum et que l'on freine les dispositifs d'entraînement d'axes restants plus faiblement, avec obtention d'un facteur ($k_j$) optimum qui est propre à chaque position $a_j$ angulaire de chaque axe j et qui est en relation avec l'accélération de freinage - $ä_{max}$ admissible au maximum de la manière suivante :

$$- ä_{max} = (a_j (s_{i-1}) + k_j (a_j(s_i) - a_j(s_{i-1})) - 2 a_j (s_{1-1}) + a_j (s_{i-2}))/T^2_{ipo} \quad (3)$$

$T_{ipo}$ étant le temps de cadence d'interpolation de la commande numérique,

1.3 on effectue l'étape 1.2 pour déterminer chaque autre point ($P_{iB}$) d'interpolation de freinage jusqu'à l'arrêt des mouvements des axes, $s_i$ étant remplacé par $s_{iB}$ et $A_i$ par $A_{iB}$ comme déterminé respectivement par les équations (1) et (2).

2. Procédé suivant la revendication 1, dans lequel on calcule les points ($P_i$, $P_{iB}$) d'interpolation et d'interpolation de freinage dans un système de coordonnées non spécifique des axes et on les transforme dans le système de coordonnées spécifiques des axes, pour déterminer la décélération du dispositif d'entraînement d'axe.

3. Procédé suivant l'une des revendications précédentes, dans lequel on déclenche un freinage à court-circuit après un laps de temps prescrit.